# EUROPÄISCHE PATENTANMELDUNG

(11) **EP 1 382 895 A1**
(43) Veröffentlichungstag der Anmeldung: **21.01.2004**
(21) Anmeldenummer: 03013922.4
(22) Anmeldetag: 20.06.2003
(51) Int. Cl.: F16L 37/252

(54) **Steckverbindung für Sanitärarmaturen**

(30) Priorität: 19.07.2002 DE 10234206
(71) Anmelder: Hansgrohe AG, 77761 Schiltach (DE)
(72) Erfinder: Kruck, Stefan, 78733 Rötenberg (DE)
(74) Vertreter: Patentanwälte Ruff, Wilhelm, Beier, Dauster & Partner

(57) **Zusammenfassung**

Zur lösbaren Anbringung einer Zuleitung (12) an einem Sanitärgehäuse von unten her wird vorgeschlagen, im Bereich des Leitungsendes einen über das Leitungsende radial vorspringenden Flansch (13) anzubringen, der eine von der Kreisform abweichende Umfangsform aufweist. Der Flansch kann mit dem Leitungsende in einer bestimmten Winkelpositionen so weit bewegt werden, dass er in axialer Richtung hinter dem Hinterschnitt (15) angeordnet ist. Durch Verdrehung des Leitungsendes zusammen mit dem Flansch kann dann der Flansch (13) in Eingriff mit dem Hinterschnitt (15) gebracht werden. Dadurch ist ein Herausziehen des Leitungsendes verhindert.

## Beschreibung

Die Erfindung geht aus von einer Steckverbindung für eine Sanitärarmatur bzw. einer Sanitärarmatur mit einer Steckverbindung.

Es ist bekannt, die Zuleitung von Sanitärarmaturen, die auf einem Waschbecken oder dergleichen montiert werden, von unten her durch den Sockel der Armatur zu führen. Diese Zuleitungen werden häufig als getrennte Rohre ausgebildet, die von oben her in den Sockel der Armatur eingesteckt werden. Bei einer bekannten Sanitärarmatur (DE 3119313) enthält der Boden einen unteren die Wasserzulaufleitungen in einer Stufenbohrung aufnehmenden Bodenteil. In diesem Bodenteil wird von oben her die Zuleitung, die eine nach außen gerichtete Sicke aufweist, eingesteckt.

Ebenfalls bekannt ist die Verbindung eines Rohrs mit einem Gehäuse (DE 4026816), bei der das Rohr von unten eingesteckt werden kann, wobei es sich in der Bohrung so verkrallt, dass eine Verriegelung erfolgt.

Der Erfindung liegt die Aufgabe zu Grunde, eine Möglichkeit zu schaffen, bei einer Sanitärarmatur Leitungen von unten her durch den Sockel mit der Armatur zu verbinden, ohne dass es hierzu eines Werkzeugs bedarf, und die Möglichkeit, die Verbindung wieder zu lösen, gegeben ist.

Zur Lösung dieser Aufgabe schlägt die Erfindung eine Steckverbindung mit den im Anspruch 1 genannten Merkmalen vor. Weiterbildungen der Erfindung sind Gegenstand von Unteransprüchen.

In der Armatur ist jetzt eine Steckbuchse ausgebildet, bei der es sich unter Umständen um eine einfache zylindrische Bohrung handeln kann. An dem Leitungsende ist ein Flansch angeordnet, der so orientiert werden kann, dass in einer bestimmten Winkelposition das Leitungsende in die Steckbuchse eingesteckt werden kann. Er kann dann anschließend so orientiert werden, dass das Leitungsende in der Steckbuchse bleibt, der Flansch aber nicht wieder herausgezogen werden kann. Damit liegt das Leitungsende sicher in der Steckbuchse und ist mit der Sanitärarmatur verbunden. Es kann aber wieder entnommen werden.

In weiterer Ausgestaltung der Erfindung kann der Hinterschnitt derart ausgebildet sein, dass die Leitung zusammen mit dem Flansch so weit verdreht werden kann, dass er das Herausziehen der Leitung aus der Buchse verhindert. Der Hinterschnitt muss also eine entsprechende Größe aufweisen, damit nach diesem Merkmal der Erfindung der Flansch entsprechend weit verdreht werden kann.

Um auch eine sichere gegen zufälliges Lösen unempfindliche Befestigung des Leitungsendes zu ermöglichen, kann erfindungsgemäß in Weiterbildung vorgesehen sein, dass der Hinterschnitt und/oder der Flansch derart ausgebildet ist, dass bei Verdrehen der Leitung zusammen mit dem Flansch eine Verkeilung auftritt, entweder eine Verkeilung des Flansches oder eine Verkeilung der Leitung. Die Verkeilung kann so gewählt sein, dass sie sich nicht von selbst lösen kann.

Eine Möglichkeit, wie die Sicherheit der Verriegelung gewährleistet werden kann, besteht darin, dass der Hinterschnitt und der Flansch einen Bajonettverschluss bilden. Ein solcher Bajonettverschluss ist selbst sichernd.

Der Hinterschnitt, zu dessen Festlegung der Flansch dient, kann beispielsweise nur einseitig ausgebildet sein. Hier kann es auch ausreichen, dass der Flansch nur teilweise ausgebildet ist, also beispielsweise nur über einen Teil des Umfangs des Leitungsendes. In Zusammenhang mit einem entsprechend langen Leitungsende kann eine solche Möglichkeit zur Festlegung ausreichen.

Es kann aber insbesondere auch vorgesehen sein, dass der Hinterschnitt so ausgebildet ist, dass er das Leitungsende vollständig umgibt, wobei seine Umfangsform ja von der Kreisform abweicht. Er steht also an verschiedenen Stellen des Leitungsendes mehr oder weniger weit über das Leitungsende vor. Dennoch kann man davon sprechen, dass der Hinterschnitt und auch der Flansch das Leitungsende umgeben.

Erfindungsgemäß kann in der Hinterschnitt auch vor der Steckbuchse ausgebildet sein. Dies kann in der gleichen Weise zur Herstellung einer Verriegelung ausgenutzt werden wie die der Fall, dass der Hinterschnitt hinter der Öffnung der Steckbuchse ausgebildet ist.

Es kann vorgesehen sein, dass die Steckbuchse in einem Adapter zwischen einer Mischerkartusche und dem Armaturengehäuse ausgebildet ist. Solche Adapter sind üblicherweise in solchen Sanitärarmaturen verhandeln, die eine Mischerkartusche verwenden. Der Adapter dient zur Herstellung der Verbindung zwischen dem Wassereintritt, den Öffnungen der Mischerkartusche und dem Wasseraustritt. Es ist nun sinnvoll, die Steckbuchse in einem solchen Adapter auszubilden.

Eine Möglichkeit, wie der Hinterschnitt tatsächlich verwirklicht werden kann, besteht darin, den Hinterschnitt an dem Armaturengehäuse auszubilden, also ihn von einem Teil des Armaturengehäuses, beispielsweise einer nach innen vorspringenden Rippe, bilden zu lassen. In einem solchen Fall kann der Hinterschnitt auch vor der Steckbuchse angeordnet sein.

Eine weitere Möglichkeit, wie der Hinterschnitt tatsächlich verwirklicht werden kann, besteht darin, ihn an dem Adapter auszubilden.

Zur Erleichterung der Herstellung kann vorgesehen sein, dass der Hinterschnitt und/oder die Steckbuchse in dem Adapter zur Seite hin offen sind und durch Einsetzen des Adapters in das Armaturengehäuse geschlossen werden. Dies lässt sich insbesondere bei der Herstellung des Adapters aus Kunststoffguss leichter verwirklichen.

Der Flansch kann direkt an dem Leitungsende angeordnet sein. In diesem Fall kann eine Abdichtung durch eine auf einer Stirnfläche des Flanschs liegende Dichtung erfolgen. Es ist aber ebenfalls möglich und wird von der Erfindung bevorzugt, dass der Flansch einen Abstand von dem freien Ende der Leitung aufweist. Dadurch entsteht vor dem Flansch eine Art Stecknippel, der zur Führung des Leitungsendes dienen kann.

Insbesondere kann vorgesehen sein, dass zur Festlegung des Leitungsendes in der Steckbuchse eine Axialbeaufschlagung erfolgen kann, beispielsweise mit Hilfe eines Federelements, insbesondere eines gummielastischen Federelements, das gleichzeitig auch eine Dichtfunktion übernehmen kann.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Teilschnitt durch ein Armaturengehäuse mit einem eingesetzten Leitungsende;
- Figur 2: einen der Figur 1 entsprechenden Schnitt bei einer zweiten Ausführungsform;
- Figur 3: einen der Figur 1 und 2 entsprechenden Schnitt bei einer weiteren Ausführungsform;
- Figur 4 - 8: Stirnansichten des Leitungsendes mit einem Verriegelungsflansch;
- Figur 9: eine Einzeldarstellung eines Schnitts durch ein Leitungsende in einem Adapter;
- Figur 10: einen der Figur 9 entsprechenden Schnitt bei einer anderen Ausführungsform;
- Figur 11: in vergrößertem Maßstab die Stirnansicht einer Steckbuchse;
- Figur 12: perspektivisch eine Möglichkeit der Festlegung eines Flanschs;
- Figur 13: eine der Figur 12 entsprechende Darstellung mit einem in dem Armaturengehäuse angeordneten Adapter;
- Figur 14: eine Seitenansicht des Adapters der Figur 13;
- Figur 15: in vergrößertem Maßstab die zur Herstellung des Hinterschnitts dienende Öffnung;
- Figur 16: eine der Figur 15 entsprechende Darstellung bei einer anderen Ausführungsform.

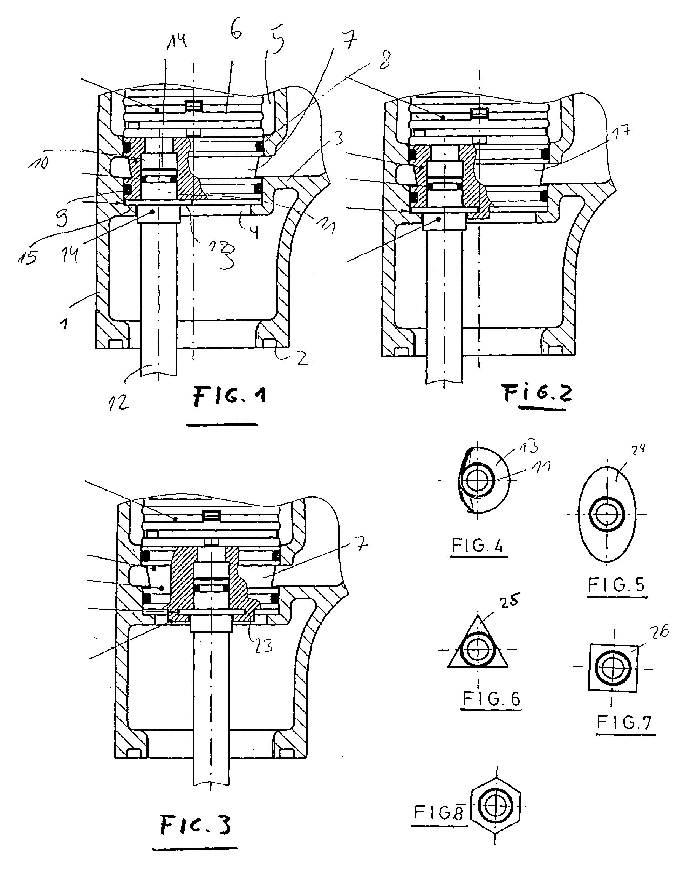

Figur 1 zeigt in einem Schnitt den unteren Teil einer Sanitärarmatur, nämlich ein Gehäuse 1 mit einer ebenen Auflagefläche 2. Innerhalb des Gehäuses ist ein Boden 3 mit einem Durchbruch 4 angeordnet. Oberhalb des Bodens mit dem Durchbruch 4 ist ein Aufnahmeraum 5 für eine Mischerkartusche 6 ausgebildet. Die Verbindung zwischen dem Boden 3 des Gehäuses und der Mischerkartusche 6 wird im dargestellten Beispiel von einem Adapterelement 7 übernommen, das in Figur 1 zum Teil im Schnitt dargestellt ist. Zur Abdichtung des Adapterelements 7 gegenüber dem Aufnahmeraum 5 für die Mischerkartusche 6 dient eine umlaufende Dichtung 8. Zur Abdichtung gegenüber dem Boden 3 dient eine ebenfalls umlaufende Dichtung 9. Das Adapterelement dient dazu, die Wasserführungen von der Zulaufseite und gegebenenfalls auch von der Ablaufseite mit den Einrichtungen innerhalb der Mischerkartusche 6 in Verbindung zu bringen.

In dem Adapterelement ist eine Stufenbohrung 10 angeordnet, von der der Teil mit dem größeren Durchmesser sich nach unten hin, also zur Zulaufseite, öffnet. In diese eine Steckbuchse bildende zylindrische Öffnung 10 ist das Ende 11 einer Leitung 12 eingesetzt. An das Leitungsende 11 schließlich sich mit Abstand von diesem ein Flansch 12 an, der im dargestellten Beispiel allseits über den Außenumfang des Leitungsendes 12 vorspringt. Der Flansch 13 ist mit Hilfe einer kurzen Buchse 14 an dem Leitungsende 12 befestigt. Bei der Leitung 12 kann es sich sowohl um eine beispielsweise aus Kupfer bestehende starre Leitung als auch um einen Schlauch handeln. Die Verformbarkeit von Schläuchen, die für diese Zwecke verwendet werden, ist nicht so groß, als dass eine Verdrehung über die sichtbare Länge des Schlauchs nicht möglich wäre.

Zur Abdichtung zwischen dem freien Ende der Leitung und der Wand der Steckbuchse 10 dient ein weiterer Dichtungsring.

In der dargestellten gesteckten Position liegt der Flansch 13 auf einer einen Hinterschnitt 15 bildenden Stufe des Armaturengehäuses auf. Auch wenn er in dieser Position nur einseitig aufliegt, so wird ein Entnehmen der Leitung 12 durch die Länge des Nippels 11 vor dem Flansch zuverlässig verhindert. Bei der in Figur 1 dargestellten Ausführungsform liegt also der Hinterschnitt 15 vor der Steckbuchse 10, die einen reinen zylindrischen Innenumfang aufweist, also selbst keine Verriegelungsfunktion übernimmt.

Als Beispiel für die Form des Flansches 13 in Figur 1 kann die Flanschform in 14 Figur 4 dienen. Hier ist zu sehen, dass der Flansch 13 in seiner rechten Hälfte die Form eines über das Leitungsendes vorspringenden Kreises aufweist, der aber im linken Bereich so abgeflacht ist, dass er bis in die Wand des Leitungsendes übergeht. Wird ein solcher Flansch mit der Leitung 12 von unten her in die Sanitärarmatur der Figur 1 eingesetzt und um 90 Grad versetzt, entsteht das Schnittbild der Figur 1. Durch Zurückdrehen um 90 ° gelangt der Flansch 13 dann wieder außer Eingriff mit dem Hinterschnitt 15, so dass der Steckschlauch wieder entnommen werden kann. Zum Verdrehen reicht es aus, an der Leitung 12 oder dem Schlauch direkt anzugreifen. Weitere Werkzeuge sind zwar möglich, nicht aber erforderlich.

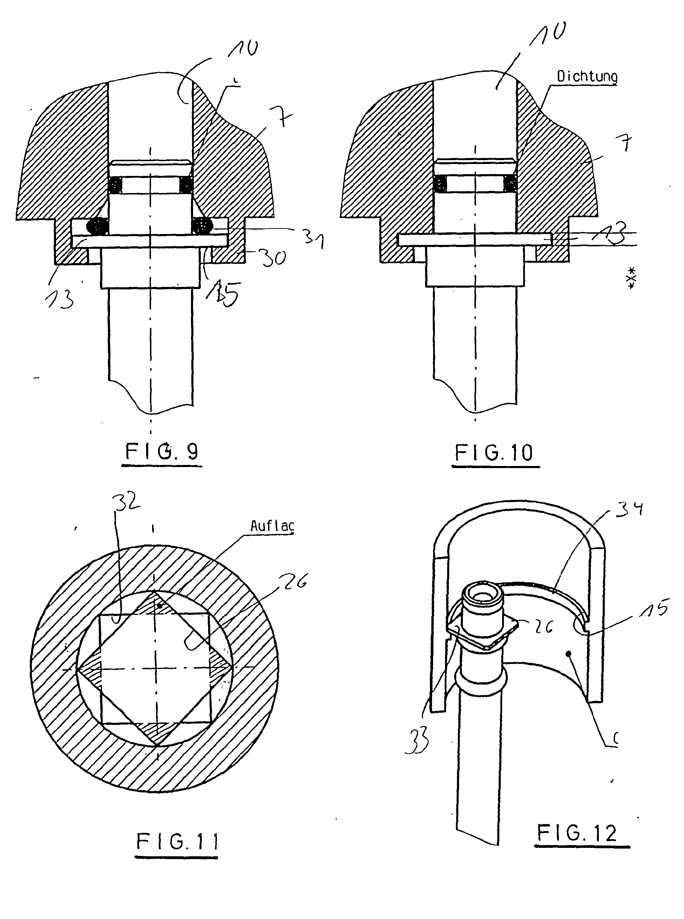

Figur 12 zeigt eine Ausführungsform, bei der mit geringen Unterschieden zu der Ausführungsform der Figur 1 das Adapterelement 7 jetzt etwas anders ausgebildet ist. Der Hinterschnitt 15 wird jetzt nicht nur durch einen Teil der Sanitärarmatur gebildet, sondern ist auch zum Teil innerhalb des Adapterelements 7 ausgebildet. Dies wird durch einen Schlitz erreicht, der sich längs eines Teils des Umfangs der Steckbuchse 10 erstreckt. Bei dieser Ausführungsform wird der Flansch 13 allseits gehalten, da sich der Hinterschnitt ebenfalls über den Umfang der Steckverbindung erstreckt.

Bei der nochmals weiteren Ausführungsform der Figur 3 ist diesmal der Hinterschnitt durch einen Schlitz 23 vollständig in dem Adapterelement 7 ausgebildet, so dass das Armaturengehäuse bei dieser Ausführungsform nicht mitwirkt.

Im Folgenden sollen nun anhand der Figuren 4 bis 8 einige Möglichkeiten der Formen von Flanschen dargestellt werden. Der unsymmetrische und einseitige Flansch 13 der Figur 4 wurde bereits im Zusammenhang mit der Figur 1 erwähnt. Ein solcher unsymmetrischer Flansch kann durchaus Vorteile haben, da er unter Umständen das Einfädeln des Leitungsendes in die Steckbuchse 10 erleichtern kann.

Figur 5 zeigt einen Flansch 24, der die Form eines langgestreckten Ovals aufweist. Auch bei ihm dient zur Verdrehung in die Verriegelungsstellung eine Drehung um 90°, ähnlich wie bei der Ausführungsform nach Figur 4.

Bei Figur 6 ist der Flansch in Form eines Dreiecks, so dass zu seinem Einsetzen eine Verdrehung um 60° erforderlich ist.

Bei der Figur 7 zeigt der Flansch die Form eines Quadrates, muss also nach dem Einsetzen um 45 Grad verdreht werden, um die Verriegelungsposition zu erreichen.

Bei Figur 8 ist die Form eines regelmäßigen Sechsecks gegeben.

Nun zu den in größerem Maßstab gehaltenen Figuren 9 und 10. Figur 9 zeigt in einem Schnitt durch das Ende der Steckbuchse 10, wie sich dort die Öffnung trichterförmig erweitert. Unmittelbar vor der sich trichterförmig erweiternden Öffnung ist in einer Art Käfig 30 der Hinterschnitt 15 gebildet, der zur Auflage des Flanschs 13 dient. Zur Festlegung dient ein aus Elastomermaterial bestehender O-Ring 31, der den Schlauchnippel in axialer Richtung gegen den Hinterschnitt 15 beaufschlagt. Gleichzeitig dient er natürlich auch als Dichtung. Ein solcher Federungseigenschaften aufweisender Dichtring 31 kann zur sicheren Festlegung des Leitungsendes in der Steckbuchse benutzt werden.

Figur 10 zeigt eine ähnliche Ausführungsart, bei der jedoch der Flansch 13 in dem entsprechenden Hinterschnitt verkeilt wird. Dies kann durch Anlaufschrägen oder dergleichen geschehen, die eine feste kraftschlüssige Anpressung des Flansches 13 gegen die Flächen des Hinterschnitts bewirken.

Figur 11 zeigt schematisch, wie ein viereckiger Flansch 26 in einer viereckigen Öffnung 32 einer Steckbuchse verriegelt wird. Zum Einschieben wird der quadratische Flansch 26, siehe Figur 7, so gegenüber der viereckigen Öffnung 32 ausgerichtet, dass eine Deckungsgleichheit entsteht. Der Flansch kann jetzt durch die Öffnung 32 hindurch geschoben werden. Anschließend wird das Schlauchende in einer der beiden möglichen Richtungen, vorzugsweise im Uhrzeigersinn, um 45 Grad verdreht. Dabei liegt dann eine Ecke des quadratischen Flanschs mittig zwischen zwei Ecken der quadratischen Öffnungen. Die in Figur 11 schraffierten Überdeckungsflächen dienen dazu, die Axialsicherung des Leitungsendes zu übernehmen.

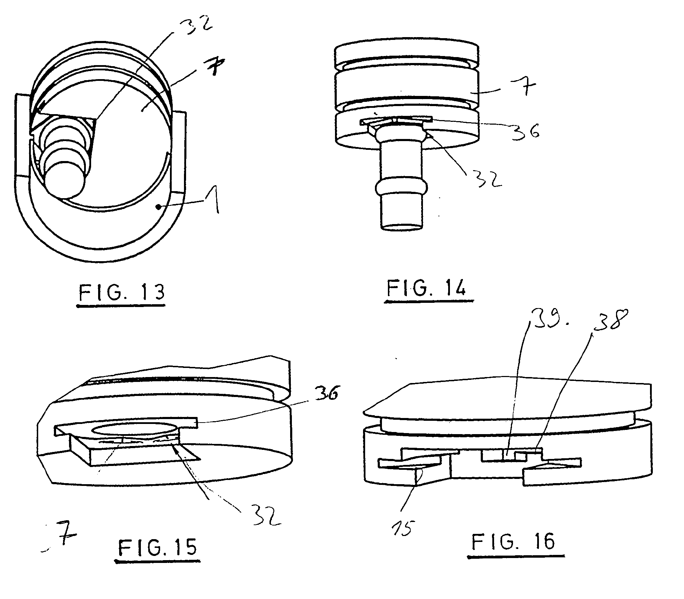

Figur 12 zeigt perspektivisch, wie eine Ecke 33 des Flanschs 26 hinter einer den Hinterschnitt 15 bildenden Rippe 34 festgehalten wird. Figur 13 zeigt eine ähnliche perspektivische Darstellung, bei der jetzt der viereckige Flansch 26 in die viereckige Öffnung 32 des Adapterelements 7 eingesetzt ist, wobei er jetzt auch hinter der Rippe 34 festliegt.

Figur 14 zeigt eine perspektivische Seitenansicht eines Adapterelements 7 mit den beiden Nuten zur Unterbringung der Dichtringe 8, 9, die unter Bezugnahme auf die Figur 1 bis 3 erwähnt wurden. Vom Umfang her ist in das Adapterelement 7 ein breiterer Einschnitt 36 und darunter ein schmaler nach unten hin offener Einschnitt eingebracht, der die Öffnung 32 bildet. Dadurch, dass der Einschnitt 36 und die Öffnung 32 zur Seite hin offen sind, lässt sich das Adapterelement in einem einfacheren Verfahren herstellen. Der Einschnitt 36 bildet den Hinterschnitt, und der darunterliegende Einschnitt die Öffnung 32 zum Einsetzen des Flanschs. Wenn das Adapterelement 7 in die Sanitärarmatur 1 eingesetzt ist, schließt sich dadurch sowohl die Öffnung 32 zur Seite hin als auch der Einschnitt 36. Die Darstellung der Figur 13 und 14 ist so gewählt, weil man auf diese Weise besser sehen kann, wie der Flansch in der Steckbuchse festgelegt wird. Bei der Erstinstallation ist es auch möglich, in dieser Weise die Montage vorzunehmen. Der Witz bei der Erfindung liegt aber darin, dass durch Verdrehen der Schlauch bzw. die Leitung 12 wieder bei montierter Armatur von dieser gelöst und entnommen werden kann. In umgekehrter Richtung ist dies natürlich auch möglich.

Figur 15 zeigt die gerade erwähnte seitliche Öffnung des Einschnitts 36 und der Öffnung 32 in nochmals vergrößertem Maßstab. An der dem Einschnitt gegenüberliegenden Rückseite der Wand des Einschnitts 36 sind zwei Vorsprünge 37 gebildet, die eine Art Verkeilung des eingesetzten Leitungsendes bewirken, wenn der Flansch in die richtige Position gedreht ist. Die Beaufschlagung des Flanschs zur Verriegelung kann auch in Querrichtung erfolgen, da ja bei den dargestellten Ausführungsformen der über den Flansch vorspringende letzte Teil der Leitung in der Steckbuchse eine seitliche Anlage finden kann.

Bei der Ausführungsform nach Figur 16 enthält der den Hinterschnitt 15 bildende Einschnitt eine Rampe 38 und hinter der Rampe eine Vertiefung 39, so dass dadurch eine Art Bajonettverschluss gebildet ist. Auch dies führt zu einer sicheren Festlegung des Leitungsendes in der Sanitärarmatur, ohne die Entnahme des Leitungsendes aber zu verhindern.

## Patentansprüche

1. Steckverbindung für Sanitärarmaturen, mit
1.1 einer der Sanitärarmatur zugeordneten Steckbuchse (10),
1.2 einem der Steckbuchse (10) zugeordneten Hinterschnitt (15),
1.3 einer mit der Armatur zu verbindenden Leitung (12), sowie mit
1.4 einem an dem Leitungsende angebrachten Flansch (13, 24, 25, 26, 27), der
1.4.1 einen von einer Kreisform abweichenden Umfang aufweist und
1.4.2 durch Drehen in Eingriff mit dem Hinterschnitt (15) bringbar ist.

2. Steckverbindung nach Anspruch 1, bei der der Hinterschnitt (15) derart ausgebildet ist, dass die Leitung (12) mit dem Flansch (13) so weit verdreht werden kann, dass er das Herausziehen der Leitung (12) aus der Steckbuchse (10) verhindert.

3. Steckverbindung nach Anspruch 1 oder 2, bei der der Hinterschnitt (15) und/oder der Flansch (13) derart ausgebildet ist, dass bei Verdrehen der Leitung (12) eine Verkeilung zwischen dem Hinterschnitt (15) und dem Flansch (13) auftritt.

4. Steckverbindung nach einem der vorhergehenden Ansprüche, bei der der Hinterschnitt (15) und der Flansch (13) einen Bajonettverschluss miteinander bilden.

5. Steckverbindung nach einem der vorhergehenden Ansprüche, bei der der Hinterschnitt (15) nur einseitig ausgebildet ist.

6. Steckverbindung nach einem der Ansprüche 1 bis 4, bei der der Hinterschnitt das Leitungsende umgebend ausgebildet ist.

7. Steckverbindung nach einem der vorhergehenden Ansprüche, bei der der Hinterschnitt mindestens teilweise vor der Steckbuchse (10) ausgebildet ist.

8. Steckverbindung nach einem der vorhergehenden Ansprüche, bei der die Steckbuchse (10) in einem Adapterelement (7) zwischen einer Mischerkartusche (6) und dem Armaturengehäuse (1) ausgebildet ist.

9. Steckverbindung nach einem der vorhergehenden Ansprüche, bei der der Hinterschnitt (15) an dem Armaturengehäuse (1) ausgebildet ist.

10. Steckverbindung nach einem der vorhergehenden Ansprüche, bei der der Hinterschnitt (15) an dem Adapterelement (7) ausgebildet ist.

11. Steckverbindung nach einem der vorhergehenden Ansprüche, bei der der Hinterschnitt (15) und/oder die Steckbuchse (10) in dem Adapterelement (7) zur Seite hin offen sind und durch Einsetzen des Adapters (7) in das Armaturengehäuse (1) geschlossen werden.

12. Steckverbindung nach einem der vorhergehenden Ansprüche, bei der der Flansch (13) einen Abstand von dem freien Ende der Leitung (12) aufweist.

13. Steckverbindung nach einem der vorhergehenden Ansprüche, bei der zur Festlegung des Leitungsendes (12) in der Steckbuchse (10) eine Axialbeaufschlagung gegen den Hinterschnitt (15) erfolgt.

14. Steckverbindung nach Anspruch 13, bei der zu axialen Beaufschlagung des Flanschs (13) ein Federelement vorgesehen ist, insbesondere ein O-Ring.
